Europäisches Patentamt

(19) European Patent Office

Office européen des brevets

(11) Publication number: **0 115 175**
**A2**

# (12) EUROPEAN PATENT APPLICATION

(21) Application number: **83307830.6**

(22) Date of filing: **21.12.83**

(51) Int. Cl.³: **H 01 R 43/02**

(30) Priority: **27.12.82 US 453310**

(43) Date of publication of application:
**08.08.84 Bulletin 84/32**

(84) Designated Contracting States:
**BE DE FR GB IT NL**

(71) Applicant: **AMP INCORPORATED**
**P.O. Box 3608 449 Eisenhower Boulevard**
**Harrisburg Pennsylvania 17105(US)**

(72) Inventor: **Dubbs, Jack Franklin**
**66 Beacon Drive**
**Harrisburg Pennsylvania 17112(US)**

(72) Inventor: **Hanyen, Clyde Kenneth**
**5261 Meadowbrook Drive**
**Mechanicsburg Pennsylvania 17055(US)**

(74) Representative: **Gray, Robin Oliver et al,**
**BARON & WARREN 18 South End Kensington**
**London W8 5BU(GB)**

(54) **Elastomeric strip of encapsulated contacts and method of manufacture.**

(57) A continuous strip of spaced-apart electrical contacts (60) is taught. Briefly stated, a mold structure (49, 51) is utilized to position a plurality of contacts (58) in a mold. A polymeric material (56) such as silicone is thereafter injected into the mold which fills the interior portion of the contact (66) as well as encapsulating the exterior upper portion of the contact, thereby producing a strip of spaced-apart electrical contacts (60) having a molded carrier strip of flexible polymeric material. A series of notches or recesses (63) are formed in the walls of the strip which thereby allows for precise indexing and contact spacing for insertion of the contact strip into a circuit board (70). The polymeric material (56) which is disposed on the interior of the contact prohibits the intoduction of contaminants into the interior of the contact as well as providing a reenterable aperture for placing electical components having terminal leads.

./...

Fig.9

"ELASTOMERIC STRIP OF ENCAPSULATED CONTACTS
AND METHOD OF MANUFACTURE"

This invention relates, generally, to strip usage of contact members and more particularly, to encapsulation of contact members with an elastomeric substance such as silicone.

In the world of high speed manufacturing, electrical components in strip form are common. An example may be found in U.S. Patent No. 2,954,117 "Electrical Circuit Component and Method of Producing same Enmasse" issued September 27, 1962 W.S. Freeburg. This teaches the use and method of forming or making electrical components enmasse in a string. However, the state of the art has advanced over Freeburg to the point where the use of carrier strips made of paper, plastic and/or metal for automatic machine usage is quite common. Additionally, the art has advanced to where the use of the strip is an integral part of the function of the component associated therewith. An example of this may be found in U.S. Patent No. 4,149,768 "Composite Strip of Thermoplastic Articles and Method of Manufacturing same". issued 17 April 1979 to Weis and which utilises thermoplastics for continuous strip purposes as well as providing a housing for electrical connectors. However, such means of strip utilisation do not provide for variation in spacing in that the strip may not be expanded or contracted. While some art such as found in United States Patent No. 3,899,232 "Circuit Board Socket" issued 12 August 1975 to Berg deceased et al and United States Patent No. 3,877,769 "Circuit Board Socket" issued 15 April 1975 to Berg, deceased, et al utilise silicone rubber inside a contact to seal the inside of the contact. It is only the interior of the socket or contact which is filled leaving open the problem of manufacturing such sockets in the continuous strip form while facilitating automatic machine insertion into a circuit board

It is desirable to have an article which is produceable in a continuous form and which is elastomeric so as to be capable of usage with differing interspace requirements which is accomplished simply by stretching or contraction of the material comprising the carrier strip thereby changing the centering of the product contained in the strip. It is also advantageous to provide a carrier strip which in addition to allowing different centering or spacing arrangements is of such a nature so as to environmentally seal the product. It is also desirable to have a carrier strip which is relatively inexpensive as well as easy to manufacture. Such a scheme is taught in the present invention.

According to the invention a continuous strip of electrical contacts comprising a connecting portion and a mounting portion, is characterised in that the strip comprises a continuously moulded carrier strip of elastomeric material having oppositely facing side walls and oppositely facing end walls, the connecting portions being moulded within the strip with connecting ends at an end wall of the strip and the mounting portion extending from the opposite end wall of the strip.

A method of making a continuous strip of electrical contacts according to the invention is characterised by the steps of

a) placing a plurality of said contacts in spaced-apart relationship in a moulding cavity and holding the contacts by the mounting portions

b) inserting into the moulding cavity a settable elastomeric m.aterial to encapsulate the connecting portions, and setting the material to form a strip of spaced-apart contacts

c) advancing the strip of contacts so that an end portion of the strip remains in the mould

d) placing a further plurality of contacts in spaced apart relation in the mould cavity, the contacts being held in the mould by the mounting portions; and

e) insertion into the mould cavity of further settable elastomeric material thereby encapsulating the connecting portions and adhering to the end portion of the strip remaining in the mould and setting the material to form an elongated strip of spaced-apart contacts.

The invention is advantageously applicable to contacts which comprise contact sockets, each having a conductor receiving end opening to a hollow conductor receiving body and a mounting portion at an end opposite to the conductor receiving end, the body being essentially perpendicular to the length of the strip with the conductor receiving end being at an end wall of the strip and the mounting portion extending from the opposite end wall of the strip.

-4-

Reference is now made to the description of the preferred embodiment illustrated in the accompanying drawings, in which:

Figure 1 is an isometric partly exploded view of a portion of a mould for making the carrier strip of the present invention;

Figure 2 is an isometric partly exploded view of another portion of the mould;

Figure 3 is an assembled view of the mould portion shown in Figures 1 and 2 and their relationship with respect to each other

Figure 4 is a cross-sectional view taken through the mould portion before the injection of a silicone rubber;

Figure 5 is a view similar to that in Figure 4 after the injection of a silicone rubber;

Figure 6 is a view similar to that in Figures 4 and 5 with the mould portion separated and the strip being removed from the moulds;

Figure 7 is a perspective view of a portion of the carrier strip after removal from the mould;

Figure 8 is an isometric view of a contact and its relationship to the carrier strip of the present invention;

Figure 9 is an illustrative example of the carrier strip of the present invention in conjunction with an insertion tool;

Figure 10 is a fragmentary isometric view of an insertion tool inserting a strip of contacts into a circuit board; and

Figure 11 is a partial sectional view of a dual-in-line plug integrated circuit being utilised with the carrier strip and associated contacts of the present invention.

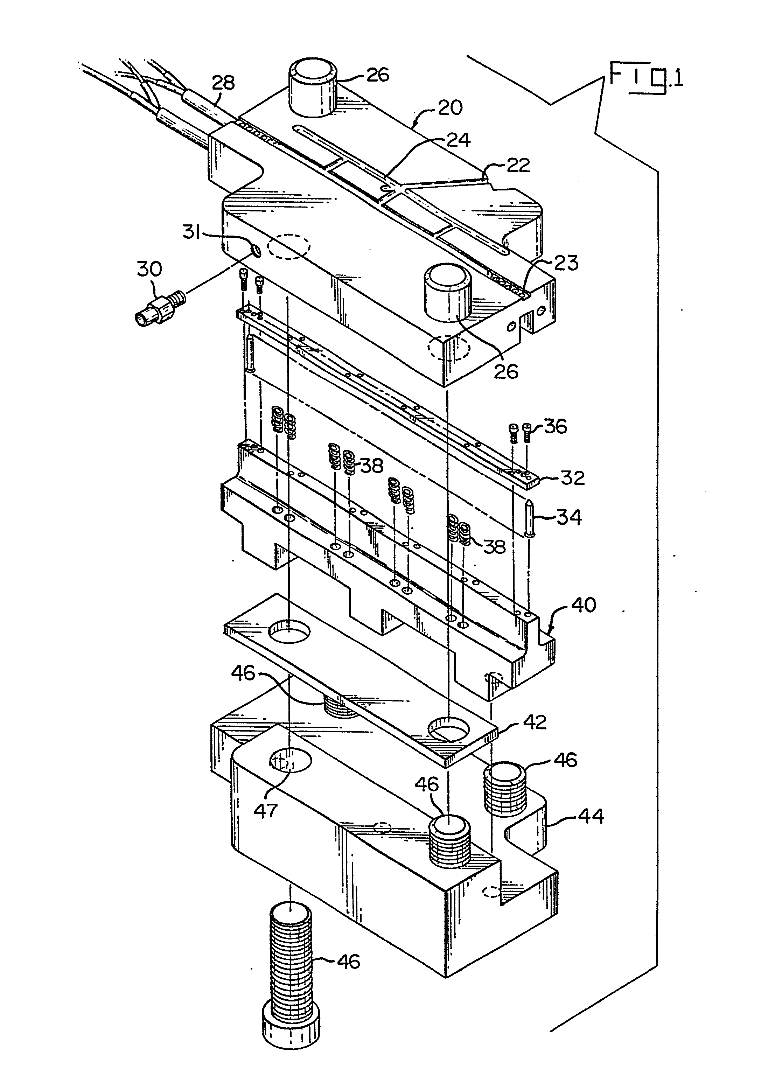

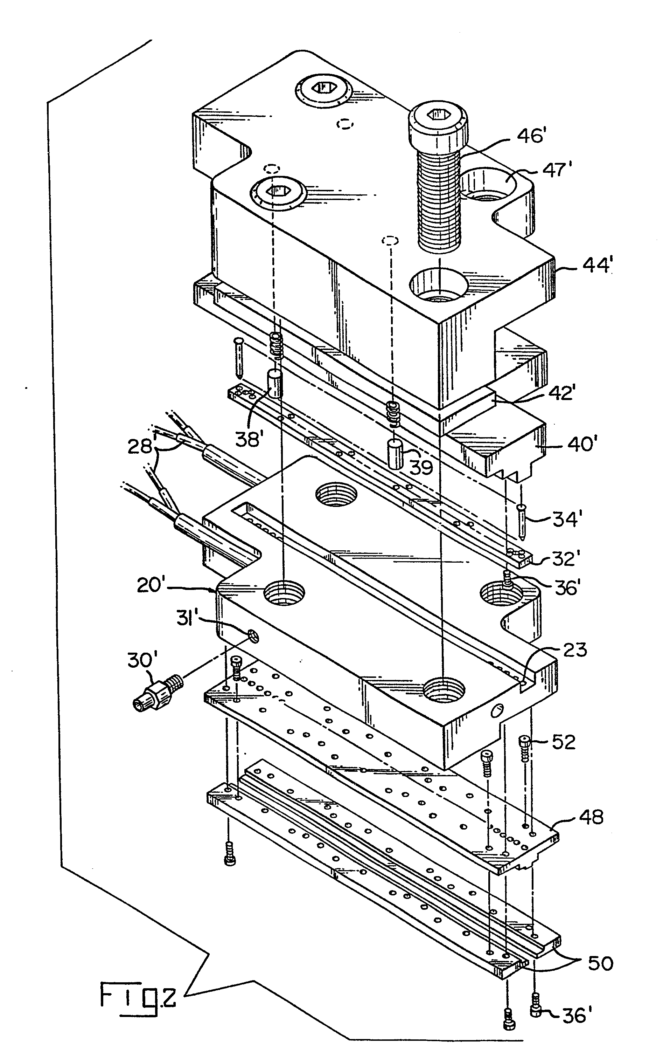

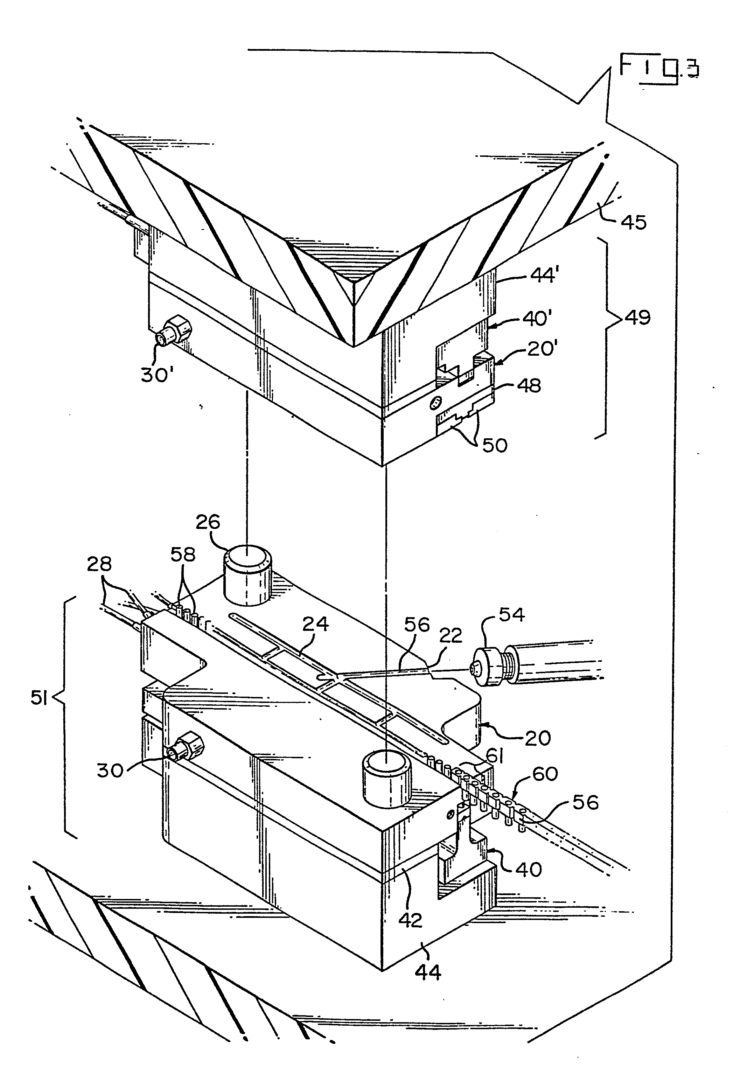

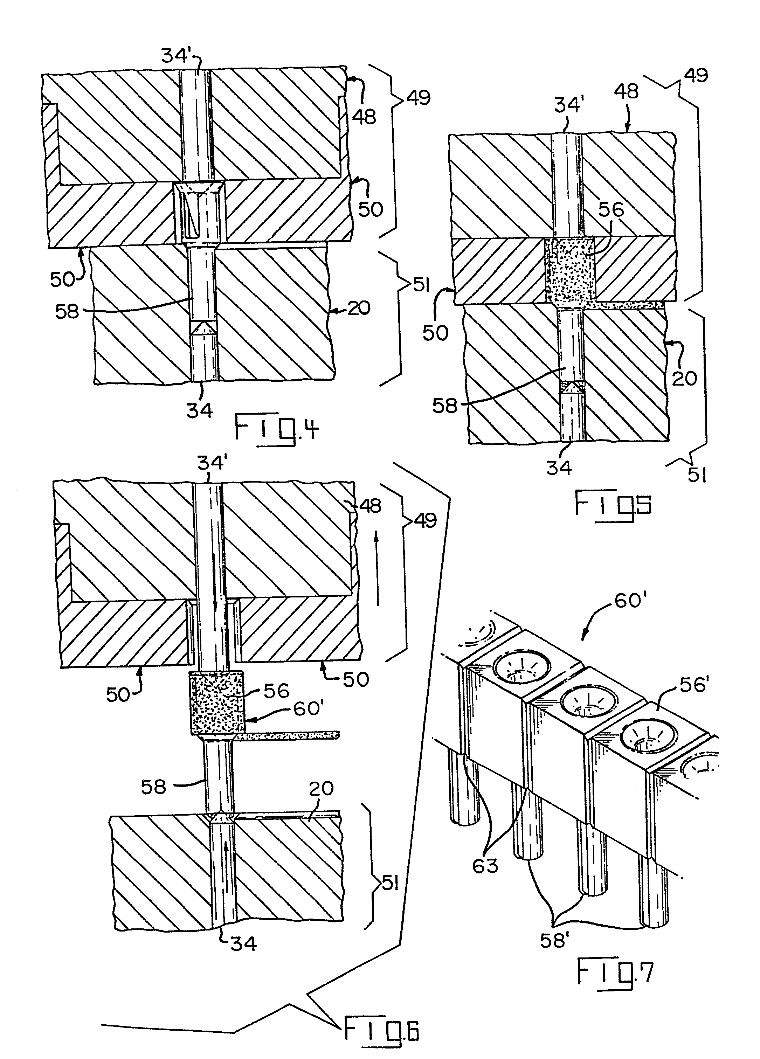

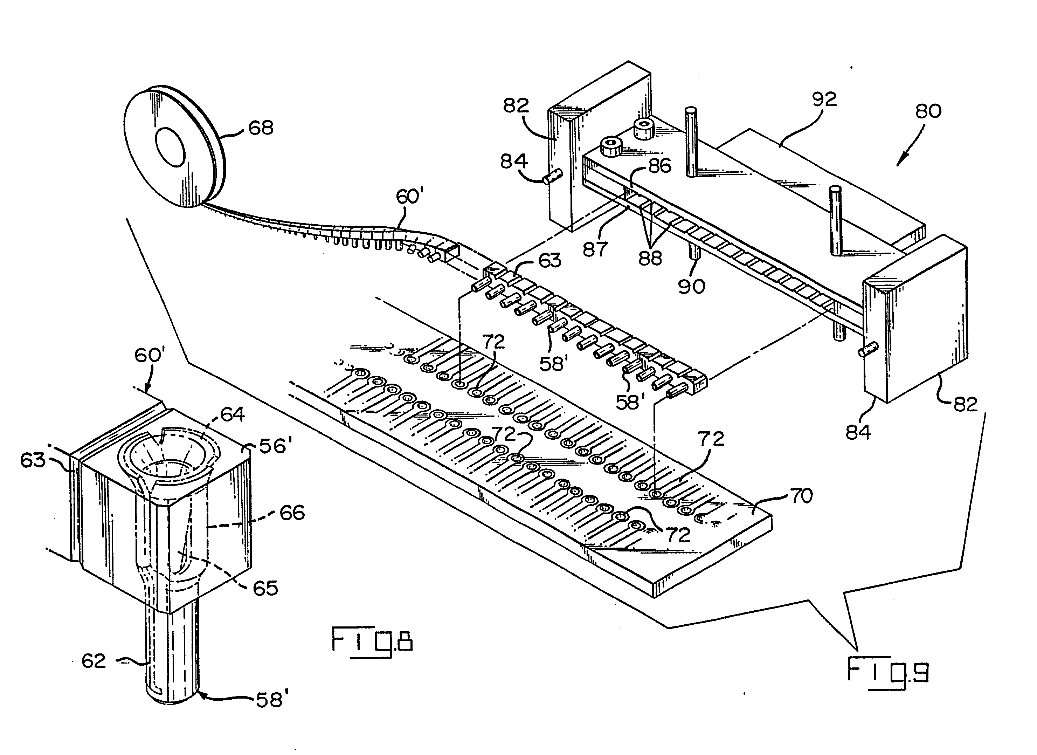

Referring now to Figure 1, a cavity mould shown generally at 20 has an inlet or spru 22 and which enters into a runner 24. The runner comprises a first closed ended channel having spaced transverse channels leading to a second open ended channel formed at intervals with spaced contact locating apertures 23. The runner 24 is used for flow of the elastomeric strip material to the strip mould cavity as shown in Figures 3, 5, 7,8, 9 and 11. Heater wires 28 are arranged to keep the mould 20 at the desired temperature and a thermocouple 30 is inserted in a thermocouple mounting aperture 31 for sensing the temperature of the mould 20. Through suitable known circuitry the heater wires 28 positioned in the cavity mould 20 are controlled to ensure proper thermocycling of the mould 20. Positioned on top of the cavity mould 20 are two positioning pins 26 which are utilised for alignment of a mating mould member (shown in Figures 2 and 3). An ejector pin retainer 32 is mounted in a channel below the row of apertures 23 and positions ejector pins 34 in registration with the aperture 23. The purpose of the ejector pins is to remove moulded product (not shown) from the mould 20 by upward movement of the pins 34 through the apertures 23. Mounting screws 36 are used to attach the ejector pin retainer 32 to an ejector block 40. Retainer ejector springs 38 are utilised to provide proper tension during the ejection cycle. A spacer 42 is located between the cavity mould 20 and the base 44, with the entire assembly being held together by retaining bolts 46.

Referring now to Figure 2, there is shown an isometric, partially exploded view of the mating portion of the mould of the present invention. Components similar in structure and operation to components described in connection with Figure 1 will be identified by the previously assigned numeral with the addition of a prime ('). Retainer bolts 46' pass through retaining bolt mounting holes 47' for fixedly holding the entire assembly together. A base 44' is utilised with a spacer 42' together with an ejector block 40' differing slightly in shape but performing a function similar to the ejector block 40 of Figure 1 and whose operation will be described in detail below. Again, retainer springs 30' are utilised and have retainer spring sleeves 39 positioned thearound. Ejector pins 34' are utilised in conjunction with an ejector pin retainer 32', with the retainer 32' again being held in place by mounting screws 36'. Heater wires 28' are utilised with a thermocouple 30' disposed in the thermocouple mounting aperture 31' of the cavity mould 20'. A cavity mould upper plate 48 is mounted by use of cavity mould plate screws 52 to the cavity mould lower plates 50 with the entire assembly 48,50 being mounted by mounting screws 36' to the cavity mould 20' and thereby forming a complete structure.

Referring now to Figure 3, there is shown the apparatus of Figures 1 and 2 assembled in juxtaposition to eachother and ready for use in making the elastomeric strip of the present invention. Here the upper mould assembly shown generally at 49 which is comprised of the components from Figure 2 and which is mounted to a machine base 45 is positioned over the lower mould assembly shown generally at 51. The lower mould assembly 51 is comprised of the assembled components of Figure 1. Also shown is an injector 54 which is utilised for injecting silicone 56 through the inlet 22 into the runner 24. Positioned in the runner 24 are contact sockets 58 which are placed in the runner 24.

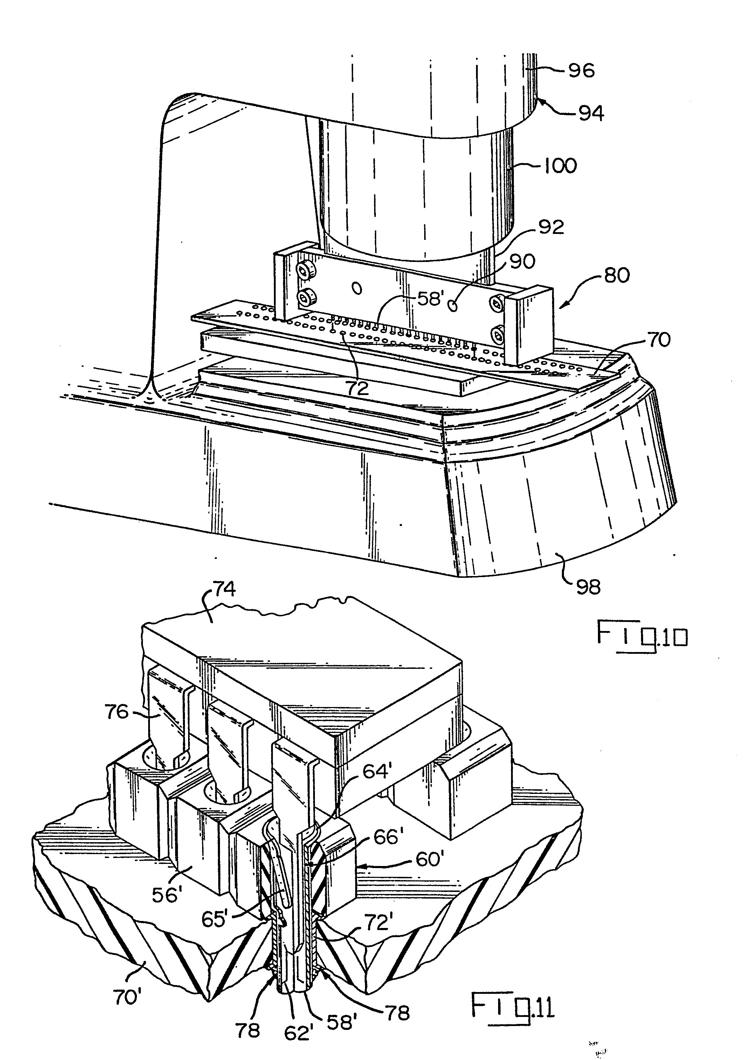

In referring to Figures 1 through 6, and in particular Figures 3 through 6, construction of the contact strip 60 may be understood. Contact sockets 58 are inserted into the runner 24 such that the mounting portions 62 (Figure 8) of the contact sockets 58 are inserted through contact spacing apertures 23 (Figure 1). The upper and lower mould assemblies 49,51 are then mated. The injector 54 then injects silicone 56 through the inlet 22 into the runner 24. The heater wires 28,28' in conjunction with the thermocouples 30,30' maintain the temperature of their respective assemblies within suitable margins so as to ensure optimum temperature for the insertion and subsequent gelling or hardening of the silicone 56. The silicone 56 is injected into the runners 24 with sufficient pressure so as to ensure that substantially all voids are filled. The silicone 56 is then allowed to cure to a temperature sufficient so as to retain the shape of the mould and in the preferred embodiment of the present invention is at approximately 425°F although other temperatures can and may be used. The upper and lower mould assemblies 49,51 are then separated and through the use of the ejector pins 34, 34' the contact sockets 58 are removed from their respective portions of the mould, and a contact strip 60 is formed. The contact strip 60 is then advanced in the mould with a portion of the contact strip being reinserted into the mould such that a strip end 61 is reinserted into an end portion of the runner 24 and thereby the contact spacing apertures 23. Another set of contact sockets 58 is inserted into the remaining portion of runner 24 and the respective contact spacing apertures 23. In a manner similar to that just described the upper and lower mould assemblies 49,51 are closed with silicone 56 injected. In that the strip ends 61 are reinserted into the mould, the subsequent injection of silicone 56 allows a bond to be formed between the strip end 61 and the newly formed contact strip 60, thereby forming a continuous contact strip 60. In this manner the process is repeated forming a contact strip of any desirable or suitable length.

Referring now to Figure 7, there is shown a portion of a finished contact strip 60'. Here it can be seen how the silicone 56' completely encapsulates the upper portion of the contact sockets 58'. The contact strip 60' has contact strip notches 63 disposed therein and which are utilised for providing additional flexibility to the overall contact strips 60' as well as providing demarcation notches for insertion of the strip into a circuit board (shown in Figure 10). Notch forming ribs are suitably provided in the cavity of the upper mould 20' to this end.

Referring now to Figure 8, there is shown a more detailed view of a contact socket 58' and its interrelation to the contact strip 60'. Here it can be seen that the contact socket 58 is comprised of a mounting portion 62, a conductor receiving end 64, and a hollow conductor receiving body 66 having conductor retaining tabs 65 contained therein. Silicone 56' completely encapsulates the upper portion of the contact socket 58 and therefore completely surrounds the hollow conductor receiving body 66 as well as completely filling the interior of the contact 58'.

Referring now to Figure 9, there is shown a long continuous strip of contact strips 60' which have been rolled onto a reel 68. Shown also is a nmumber of contacts separated from the continuous strip 60' and which are to be inserted into the circuit board 70. It is to be understood that fewer contacts or more contacts may be inserted without departing from the spirit and scope of the present invention. Shown also is a hand tool or insertion die 80 which is utilised to insert a contact strip 60' into the contact mounting hole 72 on the circuit board 70.

The insertion die shown generally at 80 is comprised of end members 82 each of which has locating pins 84 which are inserted into contact mounting holes 72 thereby aligning the die 80 on the circuit board 70 (as shown in Figure 10). The die 80 has an upper contact strip retainer 86 and a lower contact strip 87 which are used to hold and retain a contact strip 60'. The upper and lower contact strip retainers 86,87 have ridges 88 which align with the contact strip notches 63. In this manner when a strip of contact strip 60' is inserted into the die 80, the centre-to-centre spacing between contact sockets 58' can be adjusted and/or corrected to coincide with the proper centre-to-centre spacing of the contact mounting holes 72. Retaining pins 90 hold the contact insertion bar 92 in place and are removed just prior to insertion of the contact strip 60' into the contact mounting holes 72' (shown in Figure 10).

Referring now to Figure 10 there is shown a contact strip 60' contained in the insertion die 80 ready to be inserted into the circuit board 70 by a press shown generally at 94. The press 94 has an upper arm 96 and a base 98 with a jaw 100 disposed in the upper arm 96. The jaw 100 moves vertically up or down in which thereby urges the contact insertion bar 92 vertically downward thereby forcing the contact sockets 58' contained in the contact strip 60' into the contact mounting holes 72 contained in the circuit board 70. The movement of the jaw 100 is accomplished by use of a movable arm or lever (not shown) similar to that of a drill press although the jaw 100 does not rotate and which is readily obvious to one skilled in the art.

Referring now to Figure 11, there is shown an application of the present invention in conjunction with a circuit board 70' and an electronic component. Here it can be seen how the mounting portion 62' was placed through a contact mounting hole 72' and soldered 78 to a portion of a conductive path (not shown) disposed on the underside of the circuit board 70', although depending upon the contact chosen soldering may not be necessary. An integrated circuit 74 having integrated circuit pins 76 disposed thereon is mated with the contact sockets 58'. The integrated circuit pins 76 enter the conductor receiving end 64' into the hollow conductor receiving body 66' and make electrical contact with conductor retaining tabs 65'. In that the interior of the contact socket 50' is completely filled with the silicone 56', insertion of the integrated circuit pin 76 forces the silicone 56' to be moved such that electrical contact is established between the integrated circuit pins 76 and the contact sockets 58' and in particular to the conductor retaining tab 65'. Upon removal of the integrated circuit 74, containing the integrated circuit pins 76, the silicone 56' in an elastomeric fashion returns to its original position thereby forming a substantially filled contact socket 58'. Therefore, the use of the silicone 56' in addition to providing the attributes necessary for a contact strip 60' also prevents the ingress of contaminants into the interior of the contact socket 58 as well as providing an environmental seal when a contact is in use.

It is to be understood that many variations of the present invention may be utilized without departing from the spirit and scope of the present invention. For example, materials other than silicone for forming the strip may be utilized. Automatic and/or hand insertion of contact sockets into the die may also be used while different types of dies and/or arrangements of dies may be utilized for forming a strip configuration. Additionally, different types of contact sockets may be utilized and different types of electronic apparatus other than integrated circuits such as, for example, discrete components, i.e., resistors or capacitors may be utilized. Further, different types of presses may be utilized to urge the contacts into a circuit board which may be automatic, semi-automatic or manually operable. Also, contact strip notches may be placed on only one side of the contact strip or may be spaced differently from that shown while different types of insertion dies which may be automatic or semi-automatic may be utilized.

Therefore, in addition to the above enumerated advantages, the disclosed invention produces a contact strip which is elastomeric thereby allowing the placement of the contacts associated therewith into printed circuit boards or other similar devices having different hole-to-hole spacing. Additionally, the present invention produces a relatively inexpensive, easy to manufacture contact strip.

CLAIMS

1. A continuous strip of spaced-apart electrical contacts (58), each comprising a connecting portion (64,66) and a mounting portion (62), characterised in that the strip (60) comprises a continuously moulded carrier strip (60) of elastomeric material (56) having oppositely facing side walls and oppositely facing end walls, the connecting portions (64,66) being moulded within the strip (60) with connecting ends (64) at an end wall of the strip (60) and the mounting portion (62) extending from the opposite end wall of the strip (60).

2. A strip as claimed in claim 1, characterised in that the contacts each comprise a socket (58) having a conductor receiving end (64) opening to a hollow conductor receiving body (66) and a mounting portion (62) at an end opposite to the conductor receiving end (64), the body (66) being essentially perpendicular to the length of the strip (60) with the conductor receiving end (64) being at an end wall of the strip (60) and the mounting portion (62) extending from the opposite end wall of the strip (60).

3. A strip as claimed in claim 1 or claim 2, characterised in that the elastomeric material is a polymeric material.

4. A strip as claimed in claim 3, characterised in that the polymeric material is a silicone rubber.

5. A strip as claimed in any preceding claim, characterised in that notches (63) are formed in side walls of the strips (60) providing means for indexing the strip and facilitating spacing of the contacts (58).

6.    A strip as claimed in claim 5, characterised in that the notches (63) are oppositely positioned in pairs in the side walls.

7.    A method of making a continuous strip of spaced-apart electrical contacts (58) each having a mounting portion (62) and a connecting portion (64,66) characterised by the steps of

a)    placing a plurality of said contacts (58) in spaced-apart relationship in a moulding cavity and holding the contacts (58) by the mounting portions (62)

b)    inserting into the moulding cavity (49,51) a settable elastomeric material (56) to encapsulate the connecting portions (64,66), and setting the material to form a strip of spaced-apart contacts (58)

c)    advancing the strip (60) of contacts (58) so that an end portion (61) of the strip remains in the mould (49,51)

d)    placing a further plurality of contacts (58) in spaced apart relation in the mould cavity (49,51), the contacts (58) being held in the mould by the mounting portions (62); and

e)    insertion into the mould cavity (49,51) of further settable elastomeric material (56) thereby encapsulating the connecting portions (64,66) and adhering to the end portion (61) of the strip remaining in the mould (49,51) and setting the material to form an elongated strip (60) of spaced-apart contacts (58).

8.   A method as claimed in claim 7, characterised
in that the connecting portions (64,66) comprise
electrical contact sockets having conductor receiving
ends (64) opening to hollow conductor receiving bodies
(66) and mounting portions (62) at ends opposite
the conductor receiving ends (64) and the insertion
of settable elastomeric material (56) encapsulates
the conductor receiving ends (64) and the hollow
conductor receiving bodies (66).

Fig.1

2|6

0115175

Fig.2

Fig.3

0115175

FIG.4

FIG.5

FIG.6

FIG.7

Fig.9

Fig.8

0115175

96

94

100

92

90

80

58'

70

72

**FIg.10**

74

76

64'

56'

66'

60'

65'

72'

70'

78

78

62'

58'

78

**FIg.11**

98